# EUROPÄISCHE PATENTSCHRIFT

(11) **EP 1 757 192 B1**
(45) Veröffentlichungstag und Bekanntmachung des Hinweises auf die Patenterteilung: **03.06.2009**
(21) Anmeldenummer: 06017036.2
(22) Anmeldetag: 01.04.2004
(51) Int. Cl.: A23G 7/02, A23G 1/18, F25D 13/04, F25D 13/06

(54) **Vorrichtung und Verfahren zum Temperieren von Gegenständen**
Device and method for tempering objects
Dispositif et procédé destiné a tempérer des articles

(30) Priorität: 11.04.2003 DE 10317006
(43) Veröffentlichungstag der Anmeldung: 28.02.2007
(62) Teilanmeldung aus: 04724969.3
(73) Patentinhaber: AWEMA AG,, 8330 Pfäffikon (CH)
(72) Erfinder: Knobel, Josef, 8556 Wigoltingen (CH)
(74) Vertreter: Schneider Feldmann AG Patent- und Markenanwälte

(56) Entgegenhaltungen:
- EP-A- 0 333 565
- DE-A- 2 544 923
- GB-A- 951 793
- GB-A- 2 214 281
- US-A- 4 078 394

## Beschreibung

Die Erfindung betrifft eine Vorrichtung und ein Verfahren zum Temperieren von Gegenständen, insbesondere zum Kühlen von Verzehrgütern in der Confiserie, mit einem Hohlkörper mit Öffnungen in seinem Mantel, welcher von einer Führung für die Gegenstände umfangen ist, wobei dem Hohlkörper zumindest ein Ventilator und diesem zumindest ein Temperierelement zugeordnet ist.

### Stand der Technik

In vielen industriellen Bereichen werden Gegenstände hergestellt, die im Anschluss an die Herstellung gekühlt oder erwärmt werden müssen. Für viele Artikel, zum Beispiel in Fettmassenhülsen eingelegte Biskuits, ist trockene Luft mit einem Taupunkt von nicht höher als zum Beispiel 10°C erforderlich. Bei feuchter Luft werden die Biskuits zu weich.

Um eine effiziente Kühlung zu erreichen, wird der Unterschied der Temperatur der Kühlluft zur Ausformtemperatur des Kühlgutes möglichst gross gehalten. Das Kühlgut, zum Beispiel Fettmassen, kühlt aber wegen der schlechten Wärmeleitung und der grösseren Masse viel langsamer ab, als die entsprechende Giessform. Da sich in der Kühlluft in der Regel eine hohe Luftfeuchtigkeit befindet, kann es an der Form zu Kondenswasserbildung kommen, was wiederum zu Wasserflecken auf dem Produkt führt.

Aus der WO 99/04643 ist beispielsweise eine Vorrichtung der o.g. Art bekannt, bei der in den Hohlkörper bzw. in dessen Innenraum von unten her Luft eingeführt wird, die aus Luftöffnungen ausströmt und nachfolgend die Formen mit Kühlluft beaufschlagt. Durch diese Anordnung wird die Form, da sie auf einem Plattenbad liegt, nur von oben her gekühlt und die Kondenswasserbildung nicht berücksichtigt.

Durch die EP 0 333 565 A1 gehört eine Klimatisierungskammer mit einem Förderband zum Stand der Technik. Das Förderband weist eine ein Produkt tragende Unterlage und einen auf einer Seite aufstehenden Seitenwand auf. Das Förderband wird wendelförmig in der Klimatisierungskammer geführt.

Aus der GB 951,793 geht ein Kühltunnel für eine fliessende oder halbfliessende Form hervor. In dem Kühltunnel können zwei unterschiedliche Temperaturzonen eingestellt werden.

### Aufgabe

Der vorliegenden Erfindung liegt die Aufgabe zugrunde, eine Vorrichtung und ein Verfahren der oben genannten Art zu entwickeln, mit der auf einfache Art und Weise ein möglichst rasches Temperieren der Gegenstände erreicht werden kann, wobei das Temperieren möglichst von allen Seiten erfolgen soll und die Kondenswasserbildung verhindert wird.

### Zur Lösung der Aufgabe

Zur Lösung dieser Aufgabe führt, dass die Führung für die Gegenstände aus einzelnen Trägerschwingen besteht, die gelenkig miteinander verbunden sind, wobei von zumindest einzelnen Trägerschwingen eine Querrippe bzw. ein Abstandshalter aufragt, auf der bzw. dem eine Form mit den Gegenständen aufliegt.

Von grösster Bedeutung ist, dass die Form möglichst offen von allen Seiten von der Kühlluft angeströmt werden kann, während sie durch die Kühlvorrichtung transportiert wird. Damit dies der Fall ist, wird eine entsprechende Führung, vorzugsweise in Form einer Rippenkette, aus einzelnen Trägerschwingen gebildet, von denen Querrippen bzw. Abstandshalter aufragen, so dass die Formen nicht direkt auf den Trägerschwingen aufliegen, sondern von diesen abgehoben sind. Die Kühlluft unter den Formen wird derart verwirbelt, dass auch der Boden der Form laufend von Kühlluft angeströmt wird. Hierdurch kommt es zu einer Vergleichmässigung und Intensivierung der Kühlung, was ein erheblicher Vorteil ist. Durch diese Anordnung wird die Form sowohl von oben wie auch von unten von der Kühlluft angeströmt.

Erfindungsgemäss sollen die Formen auch seitlich geführt werden, wozu entsprechende Seitenbegrenzungen vorgesehen sind. Diese können beispielsweise auf den Querrippen aufsitzen. Damit sie sich bei einer Umlenkung um entsprechende Umlenkrollen nicht gegenseitig stören, bei Linearführung aber eine geschlossene Seitenbegrenzung bilden, sind sie als Seitenstreifen in Form eines liegenden Z ausgebildet. Die Seitenbegrenzungen können auch in ihrer Höhe versetzt angeordnet sein. Alternativ können die Seitenbegrenzungen auch als fortlaufendes Geländer bzw. als eine Art Leitplanke entlang der Führung ausgebildet sein, das bzw. die feststehend und unabhängig von den bewegten Querrippen und Trägerschwingen befestigt ist.

Ein weiterer Gedanke betrifft die Verbesserung des Antriebs der Trägerschwingen. Zur Führung der Trägerschwinge ragt ein Gleitstück in eine entsprechende Führungsschiene ein. An diesem Gleitstück ist beidseits jeweils eine Zahnung vorgesehen, die wie ein Zahnrad eingreift. Das Eingreifen erfolgt evolventenartig bzw. abrollend, so dass es weder zu einem punktuellen noch zu einem gleitenden Eingriff der Zahnung kommt. Der Zahn des Zahnrades rollt damit flächenhaft die Zahnung ab.

Bevorzugt sind die Zahnräder mit einem gemeinsamen Antrieb verbunden. Hierzu ist jedes Zahnrad auf einer Achse zusammen mit jeweils einem Treibrad angeordnet, wobei auch die Treibräder miteinander in Eingriff stehen. In diesem Fall braucht nur ein Treibrad über ein Zwischenrad mit einem Antriebsrad in Verbindung zu stehen, wobei dieses Antriebsrad auf einer Antriebswelle angeordnet ist.

Bevorzugt steht die Antriebswelle senkrecht neben dem Hohlkörper, so dass mit einer Antriebswelle alle für den Antrieb der Führung notwendigen Antriebsräder angetrieben werden.

Durch die Führung, insbesondere in Form einer Rippenkette, die den Hohlkörper mehrmals steigend und abfallend umfängt, werden mehrere Stockwerke der Führung gebildet.

Anstelle eines einzigen von der Führung umfangenen Hohlkörpers können auch zwei nebeneinander stehende Hohlkörper verwendet werden, die in Form einer "8" von der Führung steigend und abfallend umfangen werden.

Der verfahrensmäßige Teil der Aufgabe wird durch ein Verfahren gemäss Anspruch 9 gelöst.

### Figurenbeschreibung

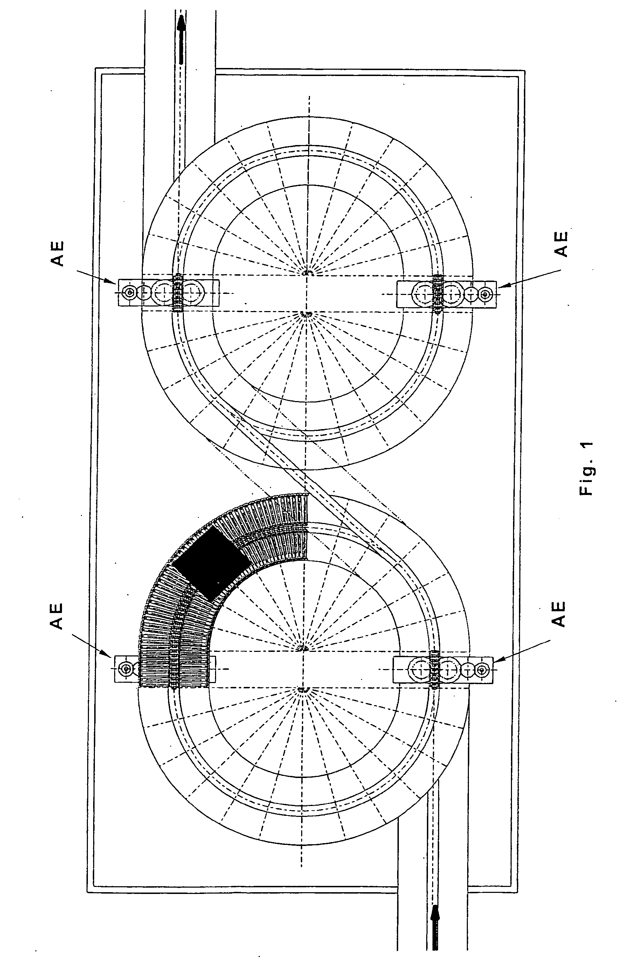

Weitere Vorteile, Merkmale und Einzelheiten der Erfindung ergeben sich aus der nachfolgenden Beschreibung bevorzugter Ausführungsbeispiele sowie anhand der Zeichnung; diese zeigt in
- Fig. 1: eine teilweise schematisch dargestellte Draufsicht auf eine erfindungsgemässe Vorrichtung zum Temperieren von Gegenständen;
- Fig. 2: einen schematisch dargestellten Längsschnitt durch die Vorrichtung gemäss Fig. 1 entlang Linie II-II;
- Fig. 3: eine Draufsicht auf einen Teil einer erfindungsgemässen Führung;
- Fig. 4A: einen Querschnitt durch die Führung im Bereich eines Antriebs mit aufgelegter Form;
- Fig. 4B: eine Draufsicht auf den Antrieb ohne aufgelegte Form;
- Fig. 5: eine Seitenansicht der erfindungsgemässen Führung im Bereich einer Umlenkung; und
- Fig. 6: eine Seitenansicht eines Teils der Führung im Bereich einer im Gegensatz zu Fig. 5 entgegengesetzten Umlenkung.

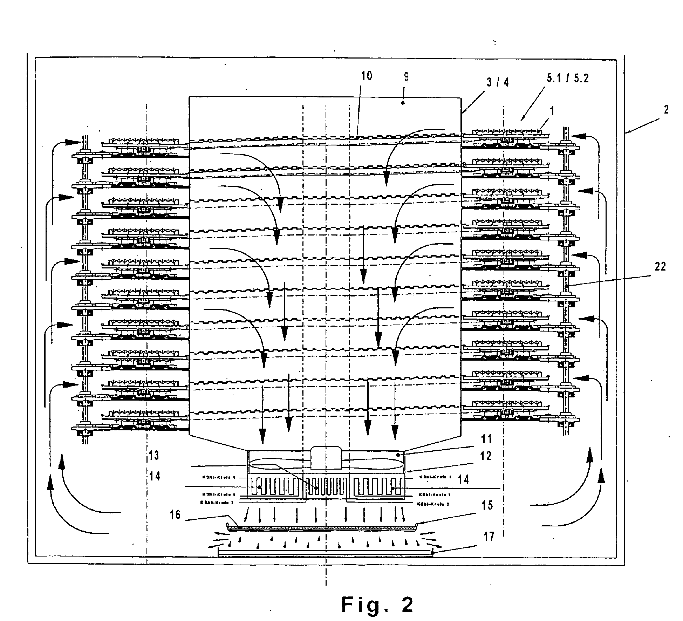

Eine erfindungsgemässe Vorrichtung zum Temperieren von Gegenständen, die sich in einer Form 1, Palette oder dgl. befinden, weist in einem Maschinengehäuse 2 zwei Hohlkörper 3 und 4 auf. Jeder Hohlkörper 3 und 4 wird von einer Führung 5 zum Führen der Formen 1 umfangen, wobei die Formen 1 über einen Einlauf 6 in die Führung 5.1 des ersten Höhlkörpers 3 gelangen. Die Führungen 5.1 und 5.2 umkreisen ihre jeweiligen Hohlkörper 3 und 4 wendelförmig, wie dies in Fig. 2 erkennbar ist.

Von der Führung 5.1 führt einen strichpunktiert angedeutete Geradstrecke 7 im oberen Bereich des Hohlkörpers 3 zur Führung 5.2 des Hohlkörpers 4, wobei die Führung 5.2 eine nach unten gerichtete Wendel aufweist. Die Führung 5.2 mündet dann in einen Auslauf 8 aus.

Der Hohlkörper 3/4 kann gemäss Fig. 2 nach oben hin von einem Deckel verschlossen oder aber auch offen sein. In seinen Mantel 9 sind eine Vielzahl von Öffnungen 10 eingeformt, die ebenfalls wendelförmig nach oben oder nach unten ausgerichtet sind. Bevorzugt folgen die Öffnungen 10 den Formen 1, die sich auf der Führung 5.1/5.2 befindet.

Im unteren Bereich sitzt in dem Hohlkörper 3/4 ein Ventilator 11, welcher Luft aus dem Innenraum des Hohlkörpers 3/4 ansaugt. Diesem Ventilator 11 ist ein Temperierelement 12 nachgeschaltet, wobei das Temperierelement 12 als Wärmetauscher ausgebildet ist und eine innere Temperierzone 13 sowie eine äussere Temperierzone 14 aufweist, die jeweils von einem Teil des Kühlkreislaufs durchströmt werden.

Unter dem Temperierelement 12 befindet sich ein Flüssigkeitsfänger 15, in dem eine Prallmatte 16 vorgesehen ist.

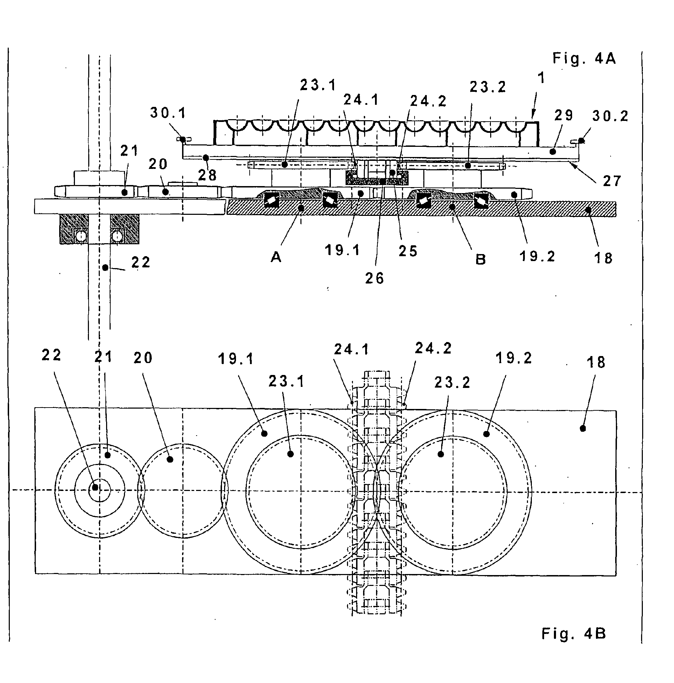

Unterhalb des Flüssigkeitsfängers 15 ist eine Auffangwanne 17 für Flüssigkeit angeordnet. Die Führung 5.1/5.2 weist gemäss Fig. 4 eine Wendelbahn 18 auf, welche die Hohlkörper 3 und 4 umläuft. Auf der Wendelbahn 18 sind zwei Treibräder 19.1 und 19.2 über Lager 20 abgestützt, wobei die Treibräder 19.1 und 19.2 miteinander in Eingriff stehen.

Das Treibrad 19.1 ist über ein Zwischenrad 20 mit einem Antriebsrad 21 verbunden. Das Antriebsrad 21 sitzt auf einer Antriebswelle 22 auf, wobei wie in Fig. 2 erkennbar die Antriebswelle 22 eine Mehrzahl von Antriebsräder 21 in den unterschiedlichen Stockwerken der Führung 5.1 bzw. 5.2 antreibt.

Wie in Fig. 4A und Fig. 4B gezeigt, weisen die Treibräder 19.1 und 19.2 jeweils eine Achse A bzw. B auf, um welche sie sich drehen. Auf jeder Achse A bzw. B sitzt auch ein Zahnrad 23.1 bzw. 23.2 auf, welche mit einer Zahnung 24.1 und 24.2 an einem Gleitstück 25 zusammenwirken. Die Zahnungen 24.1 und 24.2 sind auf ihre Zahnräder 23.1 und 23.2 in einer Krümmung so abgestimmt, dass ein evolventenartiger Eingriff zwischen Zahnung 24.1 bzw. 24.2 und Zahnrad 23.1 und 23.2 erfolgt.

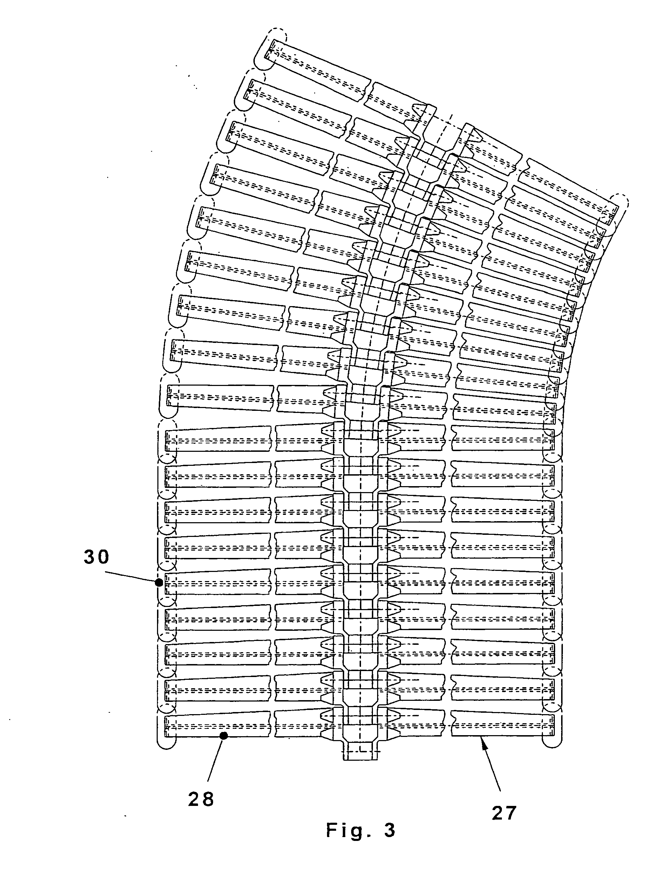

Das Gleitstück 25 gleitet in einer Schiene 26, welcher oberhalb der Wendelbahn 18 angeordnet ist, dieser jedoch folgt. Dabei ist das Gleitstück 25 Teil einer Trägerschwinge 27, die in Fig. 3 besser erkennbar ist. Eine Vielzahl von Trägerschwingen 27 sind gelenkig miteinander verbunden und bilden so eine Transportbahn für die Form 1. Dabei sitzt jedoch die Form nicht direkt auf einer Schwingenfläche 28 auf, sondern auf einer Querrippe 29, die von der Schwingenfläche 28 aufragt.

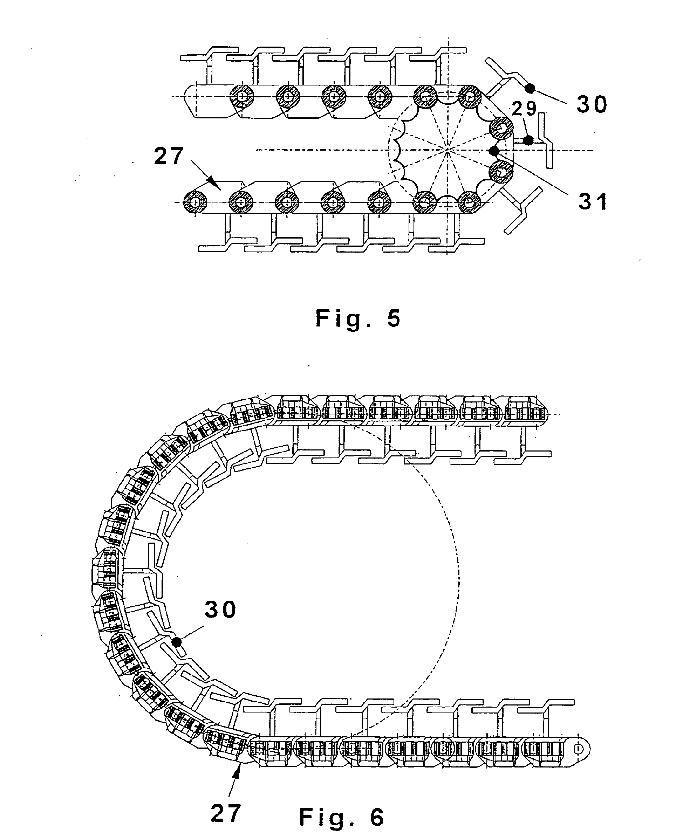

Auf der Querrippe 29 sitzen seitlich jeweils Seitenbegrenzer 30.1 bzw. 30.2 auf, welche wie in Fig. 5 erkennbar, die Form eines flachen liegenden Z aufweisen. Hierdurch wird gewährleistet, dass die Seitenbegrenzer 30 bei linearer Führung sich überlappen und somit eine geschlossene seitliche Begrenzung für die Form 1 bilden. Bei einer Umlenkung um eine Umlenkrolle 31 gemäss Fig. 5 können die Seitenbegrenzer 30 auseinander klaffen, überlappen sich aber dann wieder bei Geradeführung.

Bei einer anderen Umlenkung gemäss Fig. 6 ist zwischen den Seitenbegrenzern 30 noch genügend Freiraum, so dass sie auch näher zusammengebracht werden können.

Die Funktionsweise der vorliegenden Erfindung ist folgende:

Der Ventilator 11 saugt die Luft, wie durch die Pfeile angedeutet, aus dem Innenraum des Hohlkörpers 3/4 und presst die Luft durch das Temperierelement 12. Insbesondere, wenn der Hohlkörper 3/4 nach oben hin geschlossen ist, entseht im Hohlkörper ein Unterdruck und im gesamten Maschinengehäuse 2 ein entsprechender Überdruck. In Folge des Unterdrucks in dem Hohlkörper 3/4 wird Luft durch die Öffnungen 10 angesaugt, so dass eine erhebliche, später noch zu beschreibende Luftzirkulation in den einzelnen Etagen der Führung 5.1/5.2 entsteht.

Das Temperierelement besitzt, wie oben erwähnt, die innere Temperierzone 13 und die äussere Temperierzone 14. Die innere Temperierzone 13 wird mit einem Kühlmittel beschickt, welches eine möglichst tiefe Temperatur, aber nicht unter 0°C aufweist. Die Kühltemperatur der äusseren Temperierzone 14 ist höher. Dies bedeutet, dass der Wasseranteil der Kühlluft insbesondere an der inneren Temperierzone 13 kondensiert. Der für die Kühlluft verantwortliche Teil der Temperierzone arbeitet auf einem höheren Niveau. Durch die Vermischung der jeweils durch die Temperierzone 13 und durch die Temperierzone 14 strömenden Kühlluft wird ein Taupunkt unter den üblichen Wert abgesenkt.

Beim Anfahren des Temperierelementes bildet sich noch Kondenswasser an beiden Kühlkreisen. Nach einer bestimmten Zeit bildet sich jedoch nur noch Kondenswasser am inneren Kreislauf, wobei nun der Ventilator 11 seine zweite Funktion bestens erfüllen kann. Das Kondenswasser wird nämlich in Form kleiner Wassertropfen vom Ventilator mit grosser Geschwindigkeit nach unten geblasen.

Wäre nun unterhalb des Temperierelementes 12 lediglich eine Auffangwanne vorhanden, so würde zwar ein Teil des Kondenswassers in dieser Auffangwanne verbleiben, jedoch in Folge der starken Luftströmung wieder in den Umlauf gebracht. Das bedeutet, dass ein möglicher tiefer Taupunkt nicht erreicht werden kann.

Deshalb ist erfindungsgemäss zwischen der Auffangwanne 17 und dem Temperierelement 12 der Flüssigkeitsfänger 15 mit seiner Prallmatte 16 angeordnet. Diese Prallmatte sammelt die kleinen Tröpfchen des Kondenswassers, wobei die Tröpfchen durch die Prallmatte hindurch sickern. Der grösste Teil der Luft, die aus dem Temperierelement 12 austritt, fliesst seitlich an dem Flüssigkeitsfänger 15 vorbei und nimmt dabei keine Flüssigkeit mehr mit, da diese in der Prallmatte versickert. Nur ein geringerer Teil der Luft durchdringt die Prallmatte, wird hier aber erheblich abgebremst, so dass dieser Luftstrom nicht mehr die Kraft hat, die sich in der Prallmatte sammelnden, schweren Tröpfchen aufzunehmen und mitzuführen. Diese schweren Tropfen tropfen nach unten in die Auffangwanne 17 ab. Das heisst, mit dem erfindungsgemässen Konzept wird erreicht, dass die Kühlluft auf den gewünschten Taupunkt abtrocknet.

Die abgetrocknete Luft wird nun seitlich wieder an den Wänden des Maschinengehäuses 2 entlang der Führung 5.1/5.2 nach oben geführt und tritt dort in die einzelnen Etagen der Führungen 5.1/5.2 ein. Da die Formen jedoch von den Schwingenflächen 28 abgehoben sind und auf den Querrippen 29 aufsitzen, kann die Kühlluft den Boden der Formen beaufschlagen. Dieser Boden weist normalerweise eine Vielzahl von Hohlräumen auf, in denen es zu einer erheblichen Verwirbelung der Kühlluft kommt, da sich die Kühlluft zudem vor den Öffnungen 10 des Mantels 9 staut. Diese Verwirbelungen sind durch die entsprechenden Pfeile in Fig. 4A angedeutet. Das heisst, durch diese Anordnung strömt Kühlluft die Form von oben, von unten und von beiden Seiten an, was zu einer perfekten Wärmeabgabe führt. Die Kühlung der Gegenstände wird zudem vergleichmässigt. Dies hat sehr positive Wirkung auf die Qualität der Gegenstände.

### Bezugszeichenliste

- 1: Form
- 2: Maschinengehäuse
- 3: Hohlkörper
- 4: Hohlkörper
- 5: Führung
- 6: Einlauf
- 7: Geradstrecke
- 8: Auslauf
- 9: Mantel
- 10: Öffnungen
- 11: Ventilator
- 12: Temperierelement
- 13: innere Temperierzone
- 14: äussere Temperierzone
- 15: Flüssigkeitsfänger
- 16: Prallmatte
- 17: Auffangwanne
- 18: Wendelbahn
- 19: Treibrad
- 20: Zwischenrad
- 21: Antriebsrad
- 22: Antriebswelle
- 23: Zahnrad
- 24: Zahnung
- 25: Gleitstück
- 26: Schiene
- 27: Trägerschwinge
- 28: Schwingenfläche
- 29: Querrippe
- 30: Seitenbegrenzer
- 31: Umlenkrolle

- A: Achse von 19.1
- B: Achse von 19.2

## Patentansprüche

1. Vorrichtung zum Temperieren von Gegenständen in Formen (1), insbesondere zum Kühlen von Verzehrgütern in der Confiserie, mit einem Hohlkörper (3, 4) mit Öffnungen (10) in seinem Mantel (9), welcher von einer Führung (5.1, 5.2) für die Gegenstände umfangen ist, wobei dem Hohlkörper (3, 4) zumindest ein Ventilator (11) und diesem zumindest ein Temperierelement (12) zugeordnet ist, wobei die Führung (5.1, 5.2) für die Gegenstände aus einzelnen Trägerschwingen (27) besteht, die gelenkig miteinander verbunden sind, **dadurch gekennzeichnet, dass** von zumindest einzelnen Trägerschwingen (27) eine Querrippe (29) bzw. ein Abstandshalter aufragt, auf der bzw. dem eine Form (1) mit den Gegenständen aufliegt, so dass die Formen (1) nicht direkt auf den Trägerschwingen (27) aufliegen, sondern von diesen abgehoben sind.

2. Vorrichtung nach Anspruch 1, **dadurch gekennzeichnet, dass** zumindest einzelne Trägerschwingen (27) eine ein- oder beidseitige Begrenzung (29) bzw. Seitenführung für die Form aufweisen.

3. Vorrichtung nach Anspruch 1, **dadurch gekennzeichnet, dass** die Seitenbegrenzer (30) einen Seitenstreifen in Form eines liegenden Z aufweisen, wobei diese Seitenstreifen in Führungslage übereinander greifen.

4. Vorrichtung nach einem der Ansprüche 1 bis 3, **dadurch gekennzeichnet, dass** von zumindest einzelnen Trägerschwingen (27) ein Gleitstück (25) abragt, welches in einer Schiene (26) geführt ist, in die von beiden Seiten her jeweils ein Zahnrad (23.1, 23.2) eingreift.

5. Vorrichtung nach Anspruch 4, **dadurch gekennzeichnet, dass** zwischen Zahnung (24.1, 24.2) und Zahnrädern (23.1, 23.2) ein evolventartiger Eingriff stattfindet.

6. Vorrichtung nach Anspruch 4 oder 5, **dadurch gekennzeichnet, dass** jedem Zahnrad (23.1, 23.2) ein Treibrad (19.1, 192.) zugeordnet ist, das auf der gleichen Achse (A, B) wie sein Zahnrad (23.1, 23.2) sitzt, wobei beide Treibräder (19.1, 19.2) miteinander in Eingriff stehen.

7. Vorrichtung nach Anspruch 4, **dadurch gekennzeichnet, dass** ein Treibrad (19.1) über ein Zwischenrad (20) mit einem Antriebsrad (21) an einer Antriebswelle (22) in Verbindung steht.

8. Vorrichtung nach Anspruch 7, **dadurch gekennzeichnet, dass** an der Antriebswelle (22) eine Mehrzahl von Antriebsrädern (21) in verschiedenen Stockwerken der Führung (5.1, 5.2) angeordnet ist.

9. Verfahren zum Temperieren von Gegenständen, insbesondere zum Kühlen von Verzehrgütern in der Confiserie, **dadurch gekennzeichnet, dass** eine Vorrichtung gemäss einem der Ansprüche 1 bis 8 verwendet wird, wobei der Ventilator (11) Luft aus dem Hohlkörper (3, 4) ansaugt, diese durch das Temperierelement (12) durchdrückt, die Luft anschliessend entfeuchtet und danach von aussen der Führung (5.1, 5.2) zugeführt wird.

10. Verfahren nach Anspruch 9, **dadurch gekennzeichnet, dass** die Luft in der Führung (5.1, 5.2) verwirbelt wird.

11. Verfahren nach Anspruch 9 oder 10, **dadurch gekennzeichnet, dass** die Luft im Temperierelement (12) in Bereichen unterschiedlich temperiert wird.

12. Verfahren nach einem der Ansprüche 9 bis 11, **dadurch gekennzeichnet, dass** Kondenswasser von dem Temperierelement (12) nach unten abgeblasen und auf einen Flüssigkeitsfänger (15) geschleudert wird.

## Claims

1. A device for controlling the temperature of objects in moulds (1), in particular for cooling consumable items in the field of confectionery, comprising a hollow body (3, 4) with openings (10) in its outer periphery (9) which is enclosed by a guide (5.1, 5.2) for the objects, at least one fan (11) being associated with the hollow body (3, 4) and at least one temperature-controlling element (12) being associated therewith, the guide (5.1, 5.2) for the objects consisting of individual supporting rockers, which are connected to one another in an articulated manner, **characterised in that** a transverse rib (29) and/or a spacer projects from at least individual supporting rockers (27), against which a mould (1) comprising the objects bears, so that the moulds (1) do not directly bear against the supporting rockers (27) but are lifted away therefrom.

2. The device according to Claim 1, **characterised in that** at least individual supporting rockers (27) comprise a limit stop (29) and/or lateral guide for the mould on one side or on both sides.

3. The device according to Claim 1, **characterised in that** the lateral limit stops (30) comprise a lateral strip in the form of a horizontal Z-shape, said lateral strips engaging over one another in the guide layer.

4. The device according to one of Claims 1 to 3, **characterised in that** a sliding part (25) projects from at least individual supporting rockers (27), and which is guided in a rail (26) into which one respective toothed wheel (23.1, 23.2) engages from both sides.

5. The device according to Claim 4, **characterised in that** the toothing (24.1, 24.2) and the toothed wheels (23.1, 23.2) are engaged in an involute manner.

6. The device according to Claim 4 or 5,
**characterised in that** associated with each toothed wheel (23.1, 23.2) is a driving wheel (19.1, 192.) which is located on the same axis (A, B) as its toothed wheel (23.1, 23.2), both driving wheels (19.1, 19.2) being in engagement with one another.

7. The device according to Claim 4, **characterised in that** a driving wheel (19.1) is connected to a drive wheel (21) on a drive shaft (22) via an intermediate wheel (20).

8. The device according to Claim 7, **characterised in that** on the drive shaft (22) a plurality of drive wheels (21) is arranged in different levels of the guide (5.1, 5.2).

9. A method for controlling the temperature of objects, in particular for cooling consumable items in the field of confectionery, **characterised in that** a device according to one of Claims 1 to 8 is used, the fan (11) drawing air out of the hollow body (3, 4), forcing said air through the temperature-controlling element (12), the air being subsequently dehumidified and then being fed to the guide (5.1, 5.2) from outside.

10. The method according to Claim 9, **characterised in that** the air is swirled in the guide (5.1, 5.2).

11. The method according to Claim 9 or 10, **characterised in that** the temperature of the air in the temperature-controlling element (12) is controlled differently in zones.

12. The method according to one of Claims 9 to 11, **characterised in that** condensed water from the temperature-controlling element (12) is purged downwards and centrifuged to a liquid collector (15).

## Revendications

1. Dispositif pour la régulation de la température d'objets dans des moules (1), en particulier pour le refroidissement de biens de consommation dans le domaine de la confiserie, avec un corps creux (3, 4) avec des ouvertures (10) dans son manteau (9), qui est entouré par un guidage (5.1, 5.2) pour les objets, au moins un ventilateur (11) étant attribué au corps creux (3, 4) et au moins un élément de régulation de température (12) étant attribué à ce dernier, le guidage (5.1, 5.2) pour les objets étant constitué de plusieurs coulisses porteuses (27), qui sont reliées entre elles de façon articulée, **caractérisé en ce qu'**à partir d'au moins une coulisse porteuse, se dresse verticalement une branche transversale (29) ou un élément d'espacement, sur laquelle ou sur lequel repose un moule (1) avec des objets, si bien que les moules (1) ne reposent pas directement sur les coulisses porteuses (27), mais sont surélevés par rapport à celles-ci.

2. Dispositif selon la revendication 1, **caractérisé en ce qu'**au moins certaines des coulisses portantes (27) comportent une délimitation unilatérale ou bilatérale (29) ou encore un guidage latéral pour le moule.

3. Dispositif selon la revendication 1, **caractérisé en ce que** les délimitations latérales (30) comportent une bande latérale en forme de Z couche, ces bandes latérales étant superposées dans la position de guidage.

4. Dispositif selon l'une des revendications 1 à 3, **caractérisé en ce qu'**une pièce de coulissement (25) se dresse verticalement sur au moins certaines des coulisses porteuses (27), tout en étant guidée dans un rail (26), dans lequel s'engage une dentée (23.1, 23.2) de chaque côté.

5. Dispositif selon la revendication 4, **caractérisé en ce qu'**un engagement du genre Evolvent se produit entre la denture (24.1, 24.2) et les roues dentées (23.1, 23.2).

6. Dispositif selon l'une des revendications 4 ou 5, **caractérisé en ce qu'**à chacune des roues dentées (23.1, 23.2) est attribuée une roue d'entraînement (19.1, 19.2), qui est montée sur le même axe (A, B) que sa roue dentée (23.1, 23.2), les deux roues d'entraînement (19.1, 19.2) engrenant l'une avec l'autre.

7. Dispositif selon la revendication 4, **caractérisé en ce qu'**une roue d'entraînement (19.1) est relié à une roue motrice (21) sur un arbre d'entraînement (22) par le biais d'une roue intermédiaire (20).

8. Dispositif selon la revendication 7, **caractérisé en ce que** plusieurs roues motrices (21) sont disposées sur l'arbre d'entraînement (22) à différents étages du guidage (5.1, 5.2).

9. Procédé pour la régulation de la température d'objets, en particulier pour le refroidissement de biens de consommation dans le domaine de la confiserie, **caractérisé en ce qu'**un dispositif selon l'une des revendications 1 à 8 est utilisé, dans lequel le ventilateur (11) aspire de l'air à partir du corps creux (3, 4), cet air passant à travers l'élément de régulation de température (12), l'air étant ensuite déshumidifié, puis alimenté vers le guidage (5.1, 5.2) depuis l'extérieur.

10. Procédé selon la revendication 9, **caractérisé en ce que** l'air est brassé dans le guidage (5.1, 5.2).

11. Procédé selon l'une des revendications 9 ou 10, **caractérisé en ce que** l'air dans l'élément de régulation de température est régulé à différentes températures en fonction de la zone.

12. Procédé selon l'une des revendications 9 à 11, **caractérisé en ce que** de l'eau de condensation est soufflé vers le bas à partir de l'élément de régulation de température (12) et envoyé sur un collecteur de liquide (15).
